# EUROPEAN PATENT APPLICATION

(11) **EP 3 594 107 A1**
(43) Date of publication of application: **15.01.2020**
(21) Application number: 19181972.1
(22) Date of filing: 24.06.2019
(51) Int. Cl.: B64C 3/38, B64C 29/00, B64C 39/00, B64D 27/02

(54) **VERTICAL TAKE-OFF AND LANDING AIRCRAFT**

(30) Priority: 13.07.2018 GB 201811521; 13.07.2018 GB 201811522
(71) Applicant: Rolls-Royce plc, London SW1E 6AT (GB)
(72) Inventor: James, Darren, Derby, Derbyshire DE24 8BJ (GB); Manohar, Anmol, Derby, Derbyshire DE24 8BJ (GB); Fillingham, David, Derby, Derbyshire DE24 8BJ (GB); Bacic, Marko, Derby, Derbyshire DE24 8BJ (GB)
(74) Representative: Rolls-Royce plc

(57) **Abstract**

An aircraft (10) defining longitudinal (A), lateral (B) and vertical (C) directions the aircraft (10) comprising:
a main wing (16) and a tail (18), each being pivotable about the lateral direction (B);
a plurality of main propellers (30) mounted to the main wing (16), and configured to pivot with the main wing (16);
at least one cruise propeller (32) mounted to the tail (18), and configured to pivot with the tail (18);
each main propeller (30) being stowable from a deployed position to a stowed position; wherein
each main propeller (30a-30d) has a fixed pitch, and each cruise propeller (32a, 32b) has a variable pitch.

## Description

The present disclosure concerns a Vertical Take-off and Landing (VTOL), short take-off and vertical landing (STOVL) or short take-off and landing (STOL) aircraft.

STOL, STOVL and VTOL aircraft are used where take-off and landing distances are restricted, for instance from ships at sea. Conventional VTOL aircraft include helicopters, tilt rotor aircraft and tilt wing aircraft.

In a tilt-wing aircraft, propulsors are mounted to the wings, which pivot such that the wing mounted propulsors provide either lift or forward thrust depending on the position of the wing. Prior tilt wing aircraft are known, such as the XC-142, Vertol VZ-2 Kaman K-16B, Hiller X-18 and the Canadair CL-84. However, none of these aircraft has reached operational service, in part due to their low operational efficiency and high noise levels in view of the large propeller disc loadings necessary to provide both sufficient hover performance, and acceptable cruise performance. Various other problems arise with such aircraft, such as control in the hover during windy conditions in view of the large wing acting as a sail under such conditions.

The present disclosure describes a tilt-wing aircraft that seeks to overcome these problems.

According to a first aspect there is provided an aircraft defining longitudinal, lateral and vertical directions the aircraft comprising:
a main wing and a tail, each being pivotable about the lateral direction;
a plurality of main propellers mounted to the main wing, and configured to pivot with the main wing;
at least one cruise propeller mounted to the tail, and configured to pivot with the tail;
each main propeller being stowable from a deployed position to a stowed position; wherein
each main propeller has a fixed pitch, and each cruise propeller has a variable pitch.

Advantageously, in the vertical lift and transition modes, the main propellers can be optimised to provide efficient lift, while the cruise propellers can provide pitch control. In the forward mode, the main propellers can be stowed to provide low drag in flight, while the cruise propellers can be optimised to provide efficient thrust in forward flight. Consequently, a highly efficient aircraft is provided. Additional advantages of the disclosed aircraft and additional optional features are set out below.

The aircraft may be provided with at least a first main propeller mounted to a port side of the main wing and a second propeller mounted to a starboard side of the main wing. At least two main propellers may be mounted to each side of the main wing. Advantageously, in the event of the failure of one main propeller or a drive arrangement for one main propeller during vertical flight, the other propeller on that wing can be used to provide lift, thereby providing safe operation in the event of a propeller failure.

Each of the main propellers may be mounted to the main wing by a nacelle. Each of the main propellers may be stowable on a surface of, or within, the respective nacelle.

Each of the main propellers may have a fixed pitch.

At least two cruise propellers may be mounted to the tail. Consequently, again, redundancy is provided.

The aircraft may comprise a variable pitch mechanism configured to vary the pitch of the cruise propellers. Advantageously, the cruise propellers can be optimised for production of thrust during high and low speed, forward operation.

The aircraft may comprise one or more electric motors configured to drive one or more of the propellers. Advantageously, lightweight, power dense electric motors can be used to provide power for the propellers, allowing for relatively large numbers of propellers to be used at relatively low weight. Additionally, redundancy can be provided without resorting to heavy, expensive shafts to transmit power between the propellers in the event of a propeller failure.

The aircraft may comprise an electric power source configured to provide power for the electric motors.

The electric power source may comprise an electric power storage device such as a chemical battery or a capacitor.

Alternatively or in addition, the electric power source may comprise an internal combustion engine and an internal combustion engine driven electrical generator. The internal combustion engine may comprise a gas turbine engine.

In one embodiment, the aircraft may comprise a single gas turbine engine configured to drive one or more electric generators, with the single gas turbine engine being configured to provide electric power to a plurality of electric motors. Advantageously, a power dense source of electrical power is provided. As a further advantage, the system provides for propeller redundancy without requiring two or more gas turbine engines, which will result in a weight, cost and complexity saving.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

An embodiment will now be described by way of example only, with reference to the Figures, in which:
**Figure 1** is a top sectional view of an aircraft in a forward flight configuration, with forward propellers in a deployed position;
**Figure 2** is a side view of the aircraft of figure 1 in the configuration of figure 1;
**Figure 3** is a front view of the aircraft of figure 1 in the configuration of figure 1;
**Figure 4** is a side view of the aircraft of figure 1 in a vertical flight configuration; and
**Figure 5** is a side view of the aircraft in figure 1 in a forward flight configuration, with forward propellers in a stowed position.

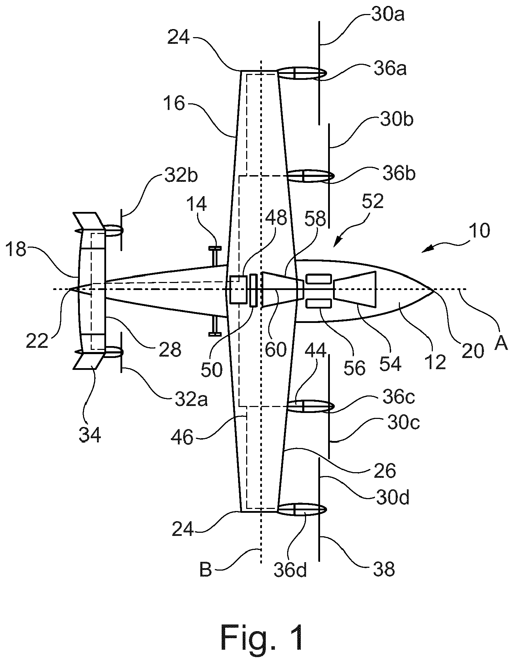

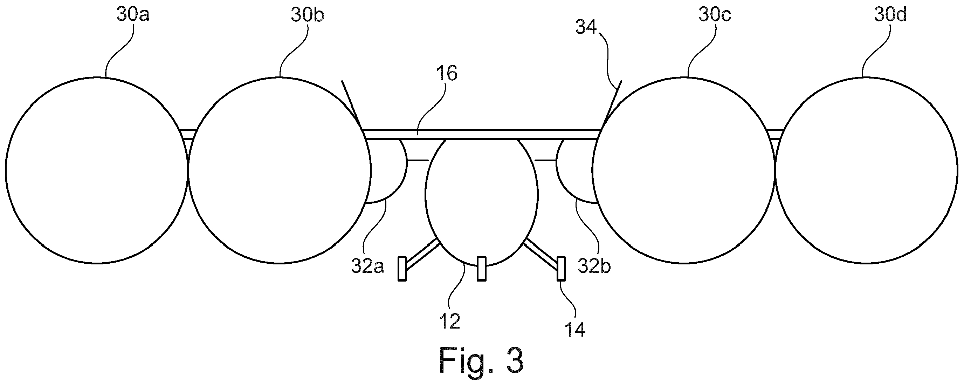

With reference to Figures 1 to 3, an aircraft 10 is shown. It will be understood that these drawings are illustrative only, and are not to scale The aircraft comprises a fuselage 12 supported by landing gear 14. The aircraft further comprises a pair of forward main wings 16, which are located such that a centre of lift in flight of the main wings 16 is approximately adjacent a centre of gravity. The aircraft 10 further comprises a tail (also known as an empennage), which comprises horizontal tail surfaces 18 and vertical tail surfaces 34 which extend from ends of each horizontal tail surface 18. The fuselage 12 comprises a nose 20, which defines a forward end of the aircraft 10, and the tail 22 which defines a rearward end of the aircraft 10.

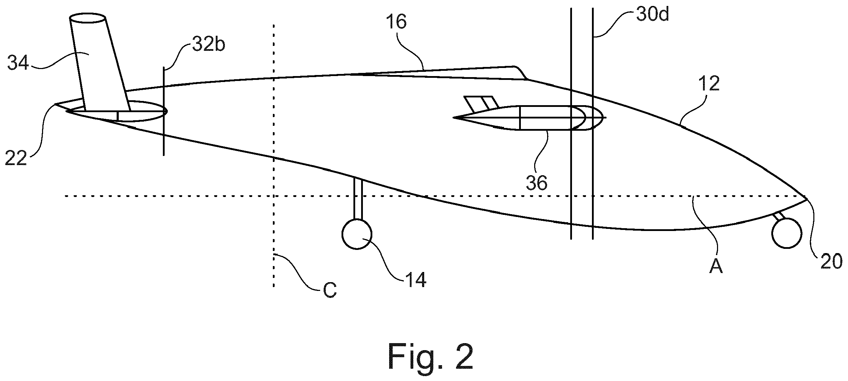

As can be seen in the figures, the aircraft 10 defines several directions. A longitudinal direction A extends between the nose 20 and tail 22 in a generally horizontal direction when the aircraft 10 is in level flight or parked on the ground. A lateral direction extends between tips 24 of the wings 16 in a direction normal to the longitudinal axis A in a generally horizontal direction. A vertical direction C (shown in figure 2) extends in a direction generally normal to the ground when the aircraft is in level flight or parked on the ground.

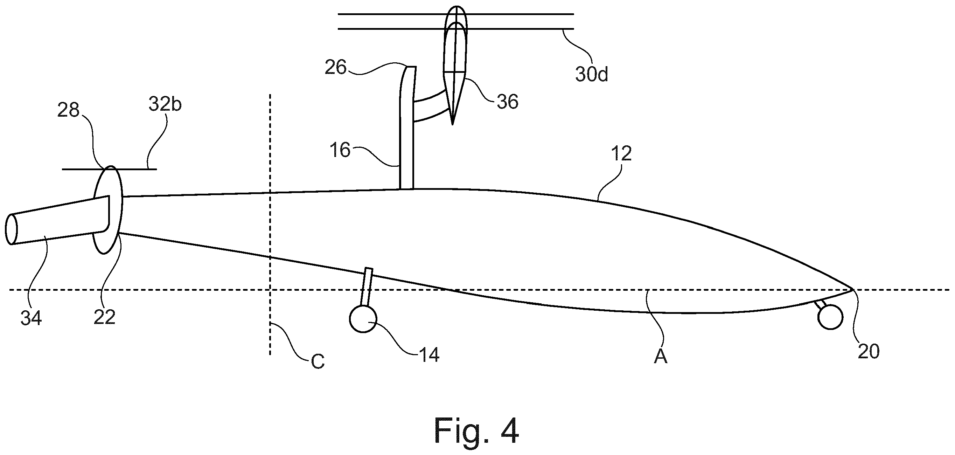

Both the main wings 16 and the horizontal tail surfaces 18 are pivotable between a forward flight configuration (as shown in figures 1 to 3) and a vertical flight configuration (as shown in figure 4). In the forward flight configuration, the wings 16 and horizontal tail surfaces 18 present respective leading edges 26, 28 toward the forward, longitudinal direction. The wings and horizontal tail surfaces 16, 18 are configured to pivot about the lateral direction B to transition to the vertical flight configuration, in which the leading edges 26, 28 are directed upwards, in the vertical direction.

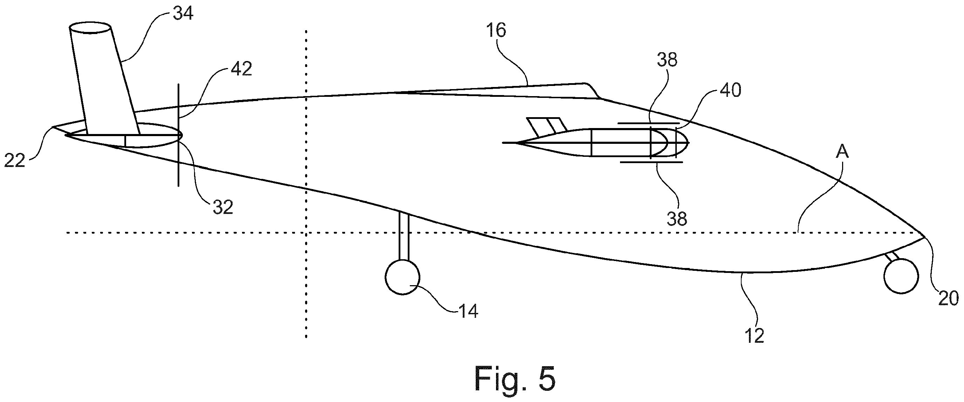

The main wings 16 comprise main propellers 30a-d. In the described embodiment, four main propellers 30a-d are provided, with two propellers 30a, 30b being provided on the port side of the aircraft 10, and two propellers 30c, 30d on the starboard side. The main propellers 30a-d are mounted forward of the leading edges 26 of the wings 16 by nacelles 36. Each of the main propellers 30a-d is configurable between a deployed position as shown in figures 1 to 4, and a stowed position as shown in figure 5.

In the deployed position, the main propellers 30a-d are extended, such that they may rotate about their respective axes to generate thrust. It will be appreciated that this thrust will generate a longitudinal force when in the forward flight mode, and a vertical force when in the vertical flight mode.

Each main propeller 30a-d comprises a plurality of blades 38. As can be seen in figure 5, each propeller blade 38 is hinged at or adjacent a root 40 of the respective blade 38, so that the respective blade outboard of the hinge can fold rearward against the respective nacelle 36. In transitioning between the deployed and stowed positions, the blades 38 may be rotated to a particular rotational position and locked in this position, so that the blades located within recesses of the nacelles, so that the blades 30 and nacelles 36 present minimal aerodynamic drag when in forward flight. While the main propellers 30 are configured to be stowable, they are preferably not configured to alter their pitch in operation, i.e. they are not pivotable about their respective long axes. Such an arrangement greatly simplifies the folding mechanism.

Similarly, the tail 22 comprises a pair of cruise propellers 32a-b, which in this embodiment, are mounted to the horizontal surfaces 18 The cruise propellers 32a-b are preferably not configured to stow in flight, but preferably are configured to vary their pitch. Consequently, a variable pitch mechanism (not shown) is provided for each cruise propeller 32a-b to pivot blades 42 of each propeller 32 about its respective long axis, to vary the angle of attack of each blade 42 in flight.

Each propeller 30a-d, 32a-b is powered by an electric motor 44 housed within a respective nacelle 36. Each electric motor 44 is supplied with electrical power from a power storage unit in the form of a battery 48 via an electrical interconnector 46. The battery is in turn supplied with electrical power from a generator 50. The generator 50 is driven by an internal combustion engine in the form of a gas turbine engine 52 comprising a compressor 54, combustor 56 and turbine 58 in flow series. The compressor 54, turbine 58 and generator 50 are interconnected by a shaft 60. In use, the gas turbine engine 52 operates in a conventional manner to provide shaft power to power the generator 50.

Typically, the aircraft is utilised as follows. During vertical takeoff, the main wing 16 and horizontal tail surface 18 are set to the vertical position as shown in figure 4. The main propellers 30a-d are set to their deployed position and are actuated to high power to generate lift in a vertical direction. Thrust from the port 30a, 30b and starboard 30c, 30d propellers may be varied relative to one another to provide roll control. The cruise propellers 32a-b are also operated, but are operated at relatively low power to provide aircraft pitch control. Consequently, the propellers 32a-b may be operated in either direction to produce either upward or downward thrust to control forward movement of the aircraft 10, and to angle the aircraft 10 to counteract head or tail winds. Alternatively, the propellers 32a-b may be operated at substantially constant speed, with pitch varying to control thrust. Consequently, rapid thrust control and so rapid pitch control can be provided. In some embodiments, the main wings 16 and horizontal tail surface 18 may also be offset to the vertical, to help provide a small forward or rearward component to the thrust. Electrical power for this mode of flight is typically provided by a combination of the batteries 48 and the gas turbine engine powered generator 50.

Once airborne, the aircraft 10 is transitioned to forward flight. The main wings 16 and horizontal tail surfaces are moved toward the forward position, as shown in figures 1 to 3. This movement may be gradual, with the angle moving closer to the horizontal as the aircraft accelerates. Both the main propellers 30a-d and cruise propellers 32a-b continue to operate during this time.

Once the aircraft 10 is established in forward flight above a certain speed, the aircraft transitions to a cruise mode. In the cruise mode, the main propellers 30a-d are stowed as shown in figure 5, while the cruise propellers 32a-b continue to operate. The cruise propellers 32a-b operate at a substantially constant speed during the cruise mode, regardless of forward aircraft speed, by varying the pitch of the propellers 32a-b. Consequently, the aircraft 10 has a low drag when operated in this mode.

Such an arrangement, with pivotable main wings 16 and tail 22 coupled with respective propellers 30a-d, 32a-b, with the main propellers 30a-d being stowable, provides for significant advantages.

Each propeller 30a-d, 32a-b sweeps an area to define a propeller disc. The weight of the aircraft 10 at a maximum takeoff weight divided by the total disc area swept by the main and cruise propellers 30a-d, 32a-b defines a propeller disc loading. The propeller disc loading must be kept relatively low, in order to limit ground pressure during hovering flight, and to increase the efficiency of the propellers in ground hovering mode, and thereby reduce the total thrust requirements of the aircraft 10. In general, the thrust requirements are at their maximum during hovering flight, and so define the overall thrust requirements of the aircraft. However, the ideal disc loading varies in accordance with aircraft speed, with a higher disc loading being preferable for high speed flight than for low speed flight and hovering.

In prior tilt-wing VTOL aircraft, in which the wing mounted propellers serve as both vertical lift propellers and forward motion propellers, a compromise must be achieved, such that the propellers provide acceptable performance at all regimes of flight.

Surprisingly, the inventors have found that this compromise is so severe, that it is preferable to optimise the main wing mounted propellers 30a-d for only vertical flight, and to provide separate cruise propellers 32a-b for operation during cruise, with the main wing mounted propellers 30a-d being optimised for cruise speeds. By stowing the main wing mounted propellers 30a-d during cruise flight, the drag created by these is minimised, thereby resulting in an overall aircraft level benefit. This benefit is further enhanced by the provision of electrically powered main propellers 30a-d, which have a high power to weight ratio, which minimises the weight penalty of having inoperative propellers in cruise.

Consequently, the vertical lift main wing propellers 30a-d have a relatively large area relative to their maximum power rating and relative to the overall weight of the aircraft, while the cruise propellers 32a-b have a relatively low area relative to their maximum power rating. Consequently, a low propeller disc loading is achieved for vertical flight (in view of the large combined areas of the propellers 30a-d, 32a-b), while a high disc loading is provided for cruise flight (in view of the low area of the propellers 32a-b). Furthermore, since the inlet air flow rate and vertical speed of the aircraft 10 during the however is relatively constant, the main propellers 30a-d can be designed with fixed pitch, without seriously affecting their efficiency. On the other hand, since the cruise propellers 32a-b are utilised in all phases of flight, they do not need to be stowed, and so a variable pitch mechanism is provided for efficient operation at a range of speeds, without interfering with the propeller stowage mechanism.

The electrical system of the aircraft 10 provides further benefits. For example, loss of a single main propeller 30 would normally result in loss of control of the aircraft in the vertical mode (due to the resulting roll moment), unless provision is made to provide increased thrust on the side of the failed propeller. However, electrical motors can be "over-rated" for short periods, i.e. they can be operated at greater than their rated power. Typically, electric motors can be over-rated by up to 100%. This is not generally true of gas turbine engines or other internal combustion engines. Consequently, by providing four main wing propellers 30a-d, with two on each side of the main wing, each of which is operated by a respective electric motor 44, redundancy can be provided without excessive additional weight. Additionally, the weight of electrical motors 44 typically scales linearly, so that two electric motors generally weigh the same as one electric motor having the same power as the two motors combined. Consequently, there is little weight penalty for providing additional propulsors.

There are also benefits to providing two propellers 30a-d on each side of the main wing 16 rather than one. The total rotor disc area can be increased for a given height, while still providing sufficient clearance to allow the aircraft 10 to land in a conventional forward motion (i.e. with the wings in cruise mode), without stowing the propellers 30a-d, or causing them to strike the ground. Consequently, relatively low propeller disc loading can be achieved (and so efficient hover), whilst allowing for conventional landing. Consequently, the tilt mechanism is not safety critical, and so need not have redundant mechanisms.

Furthermore, by providing the cruise propellers 32a-b at the tail 22, the cruise propellers 32a-b can be utilised to provide pitch control in the vertical flight mode. This is further enhanced by the provision of variable pitch cruise propellers 32a-b, which allow for rapid pitch control. This may simplify the aircraft, since the main propellers 30a-d are not required for pitch control, and so do not require cyclic pitch mechanisms, unlike prior tilt wing designs.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, other types of electric storage devices could be used in place of or in addition to the battery. For instance, supercapacitors or chemical fuel cells could be used. The battery could use any suitable type of chemistry, such as lithium ion, or primary lithium cells.

Either the electrical storage device or the gas turbine engine could be omitted, with power being provided solely from either the electrical storage device or the gas turbine engine. Alternatively, different types of internal combustion engines could be used, such as piston engines or rotary engines.

One or more of the propellers could be driven by a direct drive shaft extending between the internal combustion engine and the propeller, which may include a differential or reduction gearbox. Consequently, weight may be reduced further, and efficiency may be increased, since less mechanical to electrical conversion is required.

In other embodiments, two, six or more main wing propellers may be provided.

## Claims

1. An aircraft (10) defining longitudinal (A), lateral (B) and vertical (C) directions the aircraft (10) comprising:
a main wing (16) and a tail (18), each being pivotable about the lateral direction (B);
a plurality of main propellers (30a-d) mounted to the main wing (16), and configured to pivot with the main wing (16);
at least one cruise propeller (32a, 32b) mounted to the tail (18), and configured to pivot with the tail (18);
each main propeller (30a-d) being stowable from a deployed position to a stowed position; wherein
each main propeller (30a-30d) has a fixed pitch, and each cruise propeller (32a, 32b) has a variable pitch.

2. An aircraft according to claim 1, wherein the aircraft has at least a first main propeller (30a) mounted to a port side of the main wing (16) and a second propeller (30d) mounted to a starboard side of the main wing (16), and at least two main propellers (30a-d) may be mounted to each side of the main wing (16).

3. An aircraft according to claim 1 or claim 2, wherein each of the main propellers (30a-d) is mounted to the main wing (16) by a nacelle (36a-d), and each of the main propellers (30a-d) is stowable on a surface of, or within, the respective nacelle (36a-d).

4. An aircraft according to any of the preceding claims, wherein at least two cruise propellers (32a, 32b) are mounted to the tail (18).

5. An aircraft according to any of the preceding claims wherein the aircraft (10) comprises one or more electric motors (44) configured to drive one or more of the propellers (30a-d, 32a-b).

6. An aircraft according to claim 5, wherein the aircraft comprises an electric power source (48, 50) configured to provide power for the electric motor (44).

7. An aircraft according to claim 6, wherein the electric power source comprises an electric power storage device such as a chemical battery (48) or a capacitor.

8. An aircraft according to claim 6 or claim 7, wherein the electric power source comprise an internal combustion engine (52) and an internal combustion engine driven electrical generator (50).

9. An aircraft according to claim 8, wherein the internal combustion engine comprise a gas turbine engine (52).

10. An aircraft according to claim 9, wherein the aircraft comprises a single gas turbine engine (52) configured to drive one or more electric generators (50), with the single gas turbine engine (52) being configured to provide electric power to a plurality of electric motors (44).
